# EUROPÄISCHE PATENTANMELDUNG

(11) **EP 4 664 734 A1**
(43) Veröffentlichungstag der Anmeldung: **17.12.2025**
(21) Anmeldenummer: 24181149.6
(22) Anmeldetag: 10.06.2024
(51) Int. Cl.: H02K 15/04, G01N 21/952, G01N 21/94, H02K 3/30, G01N 21/64

(54) **VERFAHREN UND VORRICHTUNG ZUR BEREITSTELLUNG VON LEITERABSCHNITTEN FÜR DIE INDUSTRIELLE GROSSSERIENFERTIGUNG VON HAIRPIN-STATOREN**

(71) Anmelder: Grob-Werke GmbH & Co. KG, 87719 Mindelheim (DE)
(72) Erfinder: Wegerer, Manuel, 86868 Reichertshofen (DE); Baur, Matthias, 86825 Bad Wörishofen (DE); Sandholzer, Roland, 54295 Trier (DE)
(74) Vertreter: KASTEL Patentanwälte PartG mbB

(57) **Zusammenfassung**

Zur Verbesserung der Qualität von Hairpin-Statoren und zur Verringerung des Ausschusses bei deren Fertigung schafft die Erfindung ein im Zuge der Serienfertigung von Hairpin-Statoren durchzuführendes Bereitstellverfahren zum Bereitstellen von Leiterabschnitten (14) zur Herstellung einer Spulenwicklung, umfassend:
a) Bereitstellen eines mit einer Isolationsschicht (26) umhüllten Leiters (28),
b) Abisolieren von vorbestimmten Bereichen (32) des Leiters (28), die Enden der Leiterabschnitte (14) bilden,
c) Ermitteln einer Restverschmutzung an den in Schritt b) abisolierten Bereichen (32) mittels UV-Fluoreszenz.

## Beschreibung

Die Erfindung betrifft ein Bereitstellverfahren zum Bereitstellen von Leiterabschnitten zur Herstellung einer Spulenwicklung eines Hairpin-Stators in der industriellen Großserienproduktion. Weiter betrifft die Erfindung ein Hairpinstator-Herstellverfahren zum Serienfertigen von Hairpin-Statoren in industrieller Großserienproduktion, bei dem Leiterabschnitte zur Herstellung der Spulenwicklung durch ein solches Bereitstellverfahren bereitgestellt werden. Weiter betrifft die Erfindung eine Bereitstellvorrichtung zum Bereitstellen von Leiterabschnitten zur Herstellung einer Spulenwicklung im Zuge der Serienfertigung von Hairpin-Statoren. Weiter betrifft die Erfindung eine Herstellanlage zur Großserienfertigung von Hairpin-Statoren, welche eine solche Bereitstellvorrichtung zum Bereitstellen von Leiterabschnitten zur Herstellung der Spulenwicklung aufweist. Schließlich betrifft die Erfindung eine (computerimplementierte) Steuerung und ein Computerprogramm für eine solche Bereitstellvorrichtung und/oder für eine solche Herstellanlage.

Zum technologischen Hintergrund wird auf folgende, durch Bezugnahme hierin inkorporierte Literaturstellen verwiesen, aus denen Verfahren und Vorrichtungen hervorgehen, die bei der industriellen Großserienproduktion von Hairpin-Statoren Verwendung finden:
[1] DE 10 2018 103 926 A1
[2] DE 10 2018 102 914 A1
[3] DE 10 2018 106 980 A1
[4] DE 10 2018 106 978 A1
[5] DE 10 2018 108 656 A1
[6] WO 2019/161832 A1
[7] DE 10 2018 117 A1
[8] DE 10 2018 106 977 A1
[9] WO 2019/161846 A1
[10] WO 2018/233769 A1
[11] DE 10 2018 112 876 A1
[12] WO 2018/233771 A1
[13] EP 3 771 079 A1
[14] EP 3 771 078 A1
[15] EP 3 763 472 B1
[16] EP 3 797 918 A1
[17] WO 2021/160414 A1
[18] EP 3 905 494 A1
[19] WO 2022/096079 A1
[20] EP 4 239 898 B1
[21] Wikipedia "Hairpin technology", heruntergeladen am 23.05.2024 unter https://en.wikipedia.org/wiki/Hairpin_technology
[22] VDMA, Production Process of Hairpin stators, heruntergeladen am 23.05.2024 unter https://www.researchgate.net/publication/337363214_Produktionsprozess _eines_Hairpinstators
[23] US 11 018 482 B2
[24] Wikipedia, Energiedispersive Röntgenspektroskopie, heruntergeladen am 23.05.2024 unter https://de.wikipedia.org/wiki/Energiedispersive_R%C3%B6ntgenspektrosk opie

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen. Bei der Erfindung geht es um eine industrielle Großserienproduktion von Statoren für solche elektrische Maschinen, die insbesondere als Fahrmotoren für elektrisch betriebene Fahrzeuge eingesetzt werden sollen. Genauer geht es bei der Erfindung um Einzelheiten bei der Herstellung von Hairpin-Statoren oder mit anderen Worten um Einzelheiten bei der Herstellung von Statoren nach der sogenannten Hairpin-Technologie, wie sie insbesondere in den Literaturstellen [21] oder [22] erläutert wird. Dabei werden zunächst einzelne Leiterabschnitte bereitgestellt, in U-förmig oder haarnadelförmig geformt - diese gebogenen Leiterabschnitte werden auch Hairpins oder einfach Pins genannt - und einzeln oder zu Kränzen vereinigt in ein Blechpaket eines Stators eingefügt, so dass auf einer axialen Seite die U-Biegungen (Wickelköpfe genannt) liegen und auf der anderen Seite Leiterenden vorstehen. Zum Bilden der Spulenwicklung werden die herausstehenden Leiterenden gebogen und zu Paaren verspannt und miteinander verschweißt.

[1], [6], [9], [20] offenbaren Ausführungsformen eines Herstellverfahrens und einer Herstellanlage zur industriellen Großserienfertigung von Hairpin-Statoren. Dabei werden die Hairpin-Statoren mit sehr schneller Taktzeit gefertigt. Die übrigen oben genannten Literaturstellen offenbaren Ausführungsbeispiele für einzelne Stationen oder Vorrichtungen der Herstellanlage zur Großserienfertigung von Hairpin-Statoren. Die Literaturstelle [2] offenbart Vorrichtungen und Verfahren zur Drahtzuführung. Dabei wird ein Leiter, z.B. als Endlosdraht, mit geeignetem Querschnitt, insbesondere rechteckig (einschließlich quadratisch) von einer Vorratsrolle abgerollt. Der Leiter ist mit einer Isolationsschicht, insbesondere aus einem Kunststoff (Polymer) beschichtet. Bei möglichen Bereitstellverfahren, wie sie aus [22], [8], [23] oder [15] bekannt sind, wird der Endlosdraht an Stellen, die später die zu verschweißenden Leiterenden bilden, abisoliert, um dann an den abisolierten Bereichen durchgeschnitten zu werden, um so die Leiterabschnitte zum Bilden der Hairpins bereitzustellen. Die so bereitgestellten Leiterabschnitte werden anschließend geformt. Ausführungsbeispiele für Verfahren und Vorrichtungen zum Formen sind in [3], [4], [5] und [18] offenbart. Verfahren und Vorrichtungen zum Bilden von Kränzen und Einfügen der Hairpins in ein Blechpaket sind beispielsweise in [10], [13], [14] und [12] offenbart. [7] offenbart ein Zuschneiden der Leiterenden, und [11], [16] und [17] offenbaren Schweißverfahren zum Verbinden der Leiterenden, um so die Spulenwicklung zu bilden.

Zur industriellen Großserienproduktion werden die einzelnen Prozessschritte automatisch gesteuert in sehr schneller Taktzahl durchgeführt. Um ein reibungsloses und schnelles Verfahren sicherzustellen, ist es erwünscht, jeden Prozessschritt mit hoher Qualität durchzuführen.

Die Erfindung hat sich zur Aufgabe gestellt, ein Bereitstellen von Leiterabschnitten in der industriellen Großserienproduktion von Hairpin-Statoren zu verbessern.

Zum Lösen dieser Aufgabe schafft die Erfindung ein Bereitstellverfahren nach Anspruch 1. Ein Herstellverfahren für die Herstellung eines Hairpin-Stators in industrieller Großserienproduktion, eine Bereitstellvorrichtung zur Bereitstellung der Leiterabschnitte, eine damit versehene Herstellanlage sowie eine Steuerung und ein Computerprogramm hierfür bilden die Gegenstände der Nebenansprüche.

Vorteilhafte Ausgestaltungen sind Gegenstand der Unteransprüche.

Die Erfindung schafft ein im Zuge der Serienfertigung von Hairpin-Statoren durchzuführendes Bereitstellverfahren zum Bereitstellen von Leiterabschnitten zur Herstellung einer Spulenwicklung, umfassend:
a) Bereitstellen eines mit einer Isolationsschicht umhüllten Leiters,
b) Abisolieren von vorbestimmten Bereichen des Leiters, die Enden der Leiterabschnitte bilden,
c) Ermitteln einer Restverschmutzung an den in Schritt b) abisolierten Bereichen mittels UV-Fluoreszenz.

Bei einigen Ausführungsformen umfasst Schritt c) die Schritte:
c1) Bestrahlen jedes abisolierten Bereichs mit UV-Licht;
c2) Erfassen von durch Fluoreszenz an dem Bereich erzeugter Strahlung; und
c3) Ermitteln der Restverschmutzung anhand der in Schritt c2) erfassten Strahlung.

Bei einigen Ausführungsformen umfasst Schritt c1) den Schritt:
c1.1) Anpassen der Wellenlänge des UV-Lichts an das Material der zu detektierenden Verschmutzung.

Bei einigen Ausführungsformen umfasst Schritt c1) den Schritt:
c.1.2) Anpassen oder Auswahl der Wellenlänge des UV-Lichts derart, dass das Material der Isolationsschicht zur Fluoreszenz angeregt wird.

Bei einigen Ausführungsformen umfasst Schritt c1) den Schritt:
c1.3) Bestrahlen des abisolierten Bereichs mit UV-Licht mit einer Wellenlänge im Bereich von einschließlich 100 nm bis einschließlich 470 nm, vorzugsweise 280 nm bis 450 nm und mehr insbesondere 350 nm bis 400 nm.

Bei einigen Ausführungsformen umfasst Schritt c1) den Schritt:
c1.4) Bestrahlen des gesamten abisolierten Bereichs.

Bei einigen Ausführungsformen umfasst Schritt c2) den Schritt:
c2.1) flächiges Erfassen der Fluoreszenzantwort.

Bei einigen Ausführungsformen umfasst Schritt c2) den Schritt:
c2.2) Aufnahme wenigstens eines zweidimensionalen Bildes des abisolierten Bereichs.

Bei einigen Ausführungsformen umfasst Schritt c2) den Schritt:
c2.3) Fotografieren des abisolierten Bereichs mittels einer 2D-Kamera.

Bei einigen Ausführungsformen umfasst Schritt c2) den Schritt:
c2.4) Erfassen der Strahlung durch ein optisches Filter hindurch, welches das anregende UV-Licht herausfiltert.

Bei einigen Ausführungsformen umfasst Schritt c2) den Schritt:
c2.5) Fotografieren des gesamten abisolierten Bereichs.

Bei einigen Ausführungsformen umfasst Schritt c2) den Schritt:
c2.6) Fotografieren mittels einer Kamera mit CMOS-Sensor und Global Shutter mit einer Pixelgröße größer als 5 µm.

Bei einigen Ausführungsformen umfasst Schritt c2) den Schritt:
c2.7) Fotografieren des abisolierten Bereichs von mehreren Seiten aus.

Bei einigen Ausführungsformen umfasst Schritt c3) den Schritt:
c3.1) flächiges Bewerten der Verschmutzung mittels Bildverarbeitung eines in Schritt c2) aufgenommenen Bildes.

Bei einigen Ausführungsformen umfasst Schritt c3) den Schritt:
c3.2) Analysieren von in Schritt c2) ermittelten Bilddaten mittels wenigstens eines Bildverarbeitungsalgorithmus.

Bei einigen Ausführungsformen umfasst Schritt c3) den Schritt:
c3.3) Lokalisieren der Abisolierstelle; insbesondere mittels Erfassung der Ränder des abisolierten Bereichs, insbesondere mittels Kantenerfassung.

Bei einigen Ausführungsformen umfasst Schritt c3) den Schritt:
c3.4) Detektion von Verschmutzungen in dem abisolierten Bereich.

Bei einigen Ausführungsformen umfasst Schritt c3) den Schritt:
c3.5) Identifizierung von innerhalb des abisolierten Bereichs liegenden Verschmutzungen durch Anwendung eines Schwellwert-Kriteriums, insbesondere bezüglich eines Grauwerts.

Bei einigen Ausführungsformen umfasst Schritt c3) den Schritt:
c3.6) Klassifizierung aller Pixel, die heller als ein vorbestimmter Schwellwert sind, als Verschmutzung.

Bei einigen Ausführungsformen umfasst Schritt c3) den Schritt:
c3.7) Auswahl eines Grauwerts, der mittig zwischen einem Grauwert einer UV-Fluoreszenzantwort eines vollständig mit Isolationsschicht versehenen Bereichs des Leiters und dem Grauwert einer UV-Fluoreszenzantwort des reinen leitfähigen Grundmaterials des Leiters liegt, als Schwellwert für die Verschmutzung.

Bei einigen Ausführungsformen umfasst Schritt c3) den Schritt:
c3.8) Quantifizierung der Verschmutzungen in dem abisolierten Bereich.

Bei einigen Ausführungsformen umfasst Schritt c3) den Schritt:
c3.9) Quantifizierung der Verschmutzungen durch Berechnung mehrerer Kennwerte.

Bei einigen Ausführungsformen umfasst Schritt c3) den Schritt:
c3.10) Quantifizierung der Verschmutzungen durch globale und/oder lokale Kennwerte, wobei globale Kennwerte aus Werten aus dem gesamten abisolierten Bereich ermittelt werden und lokale Kennwerte jeweils aus Werten aus einem örtlichen Teilbereich des abisolierten Bereichs oder aus einem Verschmutzungscluster in dem abisolierten Bereich ermittelt werden.

Bei einigen Ausführungsformen umfasst Schritt c3) den Schritt:
c3.11) Berechnen des mittleren Grauwerts über den gesamten abisolierten Bereich gesehen.

Bei einigen Ausführungsformen umfasst Schritt c3) den Schritt:
c3.12) Berechnen des relativen Flächeninhalts der als Verschmutzung klassifizierten Teilbereiche oder Pixel innerhalb des abisolierten Bereichs.

Bei einigen Ausführungsformen umfasst Schritt c3) den Schritt:
c3.13) Ermitteln der Größe, Form und/oder Position einzelner Verschmutzungscluster, insbesondere der größten zusammenhängenden Verschmutzung innerhalb des abisolierten Bereichs.

Bei einigen Ausführungsformen umfasst Schritt c3) den Schritt:
c3.14) Erstellen statistischer Analysedaten, insbesondere Verteilungen von Größen bzw. Positionen von Verschmutzungsclustern.

Bei einigen Ausführungsformen umfasst das Bereitstellverfahren weiter den Schritt:
d) Klassifizieren der in Schritt c) untersuchten abisolierten Bereiche als in Ordnung oder nicht in Ordnung.

Bei einigen Ausführungsformen umfasst das Bereitstellverfahren weiter den Schritt:
e) Anpassen von Schritt b) in Abhängigkeit von Schritt c) oder d).

Bei einigen Ausführungsformen umfasst Schritt d) den Schritt:
d1) Vergleich eines in Schritt c) ermittelten Kennwerts für die aktuelle Verschmutzung mit einem vorbestimmten Grenzwert.

Bei einigen Ausführungsformen umfasst Schritt d) den Schritt:
d2) Vergleich mehrerer in Schritt c) ermittelter Kennwerte für die aktuelle Verschmutzung mit jeweiligen vorbestimmten Grenzwerten.

Bei einigen Ausführungsformen umfasst Schritt d) den Schritt:
d3) Ermitteln des Resultats der Klassifizierung von einer Auswerteeinheit einer Verschmutzungsmesseinheit zu einer Steuerung einer Herstellanlage zum Herstellen von Hairpin-Statoren.

Bei einigen Ausführungsformen umfasst Schritt d) den Schritt:
d4) automatisches Ausschleusen von Leiterabschnitten, die einen als nicht in Ordnung klassifizierten abisolierten Bereich aufweisen.

Bei einigen Ausführungsformen umfasst Schritt d) den Schritt:
d5) Weiterverarbeiten von als in Ordnung befundenen abisolierten Bereichen.

Bei einigen Ausführungsformen umfasst Schritt e) den Schritt:
e1) Bestimmen einer zu großen Restverschmutzung durch Ermitteln, ob die Häufigkeit von als nicht in Ordnung klassifizierten abisolierten Bereichen einen vorbestimmten Grenzwert übersteigt.

Bei einigen Ausführungsformen umfasst Schritt e) den Schritt:
e2) Ausgabe eines Alarms im Fall einer zu großen Restverschmutzung.

Bei einigen Ausführungsformen umfasst Schritt e) den Schritt:
e3) Überprüfen einer Abisoliereinheit, in der Schritt b) durchgeführt wird, im Fall einer zu großen Restverschmutzung.

Bei einigen Ausführungsformen umfasst Schritt e) den Schritt:
e4) Kontrolle des Verschleißzustandes wenigstens einer, mehrerer oder aller Komponenten einer Abisoliereinheit im Fall einer zu großen Restverschmutzung.

Bei einigen Ausführungsformen umfasst Schritt e) den Schritt:
e5) Kontrolle einer Reinigungseinrichtung und/oder einer Absaugung im Fall einer zu großen Restverschmutzung.

Bei einigen Ausführungsformen umfasst Schritt e) den Schritt:
e6) Kontrolle und gegebenenfalls Einstellen von Prozessparametern für Schritt b) im Fall einer zu großen Restverschmutzung.

Bei einigen Ausführungsformen umfasst das Bereitstellverfahren weiter den nach Schritt a), nach Schritt b) oder nach Schritt c) durchzuführenden Schritt:
f) Vereinzeln der Leiterabschnitte von dem Leiter.

Bei einigen Ausführungsformen umfasst Schritt f) den Schritt:
f1) Durchtrennen des Leiters in den abisolierten Bereichen, um einen Leiterabschnitt zu vereinzeln.

Bei einigen Ausführungsformen umfasst Schritt a) den Schritt:
a1) Bereitstellen eines Drahtes mit rechteckigem Querschnitt.

Bei einigen Ausführungsformen umfasst Schritt a) den Schritt:
a2) Bereitstellen des Leiters mit einer Isolationsschicht, die ein organisches Material oder Kunststoffmaterial umfasst.

Bei einigen Ausführungsformen umfasst Schritt a) den Schritt:
a3) Abrollen des Leiters von einer Vorratsrolle.

Bei einigen Ausführungsformen umfasst Schritt a) den Schritt:
a4) taktweises Vorschieben des Leiters.

Bei einigen Ausführungsformen umfasst Schritt a) den Schritt:
a5) Vorschieben des Leiters mit einer Geschwindigkeit größer als 250 mm/s.

Bei einigen Ausführungsformen umfasst Schritt b) den Schritt:
b0) mechanisches, insbesondere spanabhebendes Abtragen der Isolationsschicht.

Bei einigen Ausführungsformen umfasst Schritt b) den Schritt:
b1) mechanisches Abschaben oder Abfräsen der Isolationsschicht.

Bei einigen Ausführungsformen umfasst Schritt b) den Schritt:
b2) Entfernen der Isolationsschicht mittels Laser.

Bei einigen Ausführungsformen umfasst Schritt b) den Schritt:
b3) Absaugen von Isolationsschichtpartikeln.

Bei einigen Ausführungsformen umfasst Schritt b) den Schritt:
b4) Entfernen der Isolationsschicht von wenigstens zwei Seiten aus.

Bei einigen Ausführungsformen umfasst Schritt b) den Schritt:
b5) Entfernen der Isolationsschicht auf einer Länge von 5 mm bis 30 mm.

Bei einigen Ausführungsformen umfasst Schritt b) den Schritt:
b6) Entfernen der Isolationsschicht an den Bereichen, deren Mitten einen Abstand haben, die der Länge der bereitzustellenden Leiterabschnitte entspricht.

Bei einigen Ausführungsformen umfasst das Bereitstellverfahren weiter den nach Schritt f) durchzuführenden Schritt:
g) Biegen des Leiterabschnitts zu einer U-Form oder einer I-Form mit geradlinigen Schenkelabschnitten zum Einfügen in eine Statornut und einer dachförmigen oder gekröpften Biegung dazwischen.

Gemäß einem weiteren Aspekt schafft die Erfindung ein Hairpinstator-Herstellverfahren zum Serienfertigen von Hairpin-Statoren, umfassend Durchführen des Bereitstellverfahrens nach einer der voranstehenden Ausgestaltungen zum Bereitstellen von Hairpin-Leiterabschnitten, und Einfügen der Hairpin-Leiterabschnitte in ein Blechpaket, um eine Spulenwicklung durch Verbindung der Leiterenden der eingefügten Leiterabschnitte herzustellen.

Gemäß einem weiteren Aspekt schafft die Erfindung eine Bereitstellvorrichtung zum Bereitstellen von Leiterabschnitten zur Herstellung einer Spulenwicklung im Zuge der Serienfertigung von Hairpin-Statoren, umfassend:
eine Leiterliefereinheit, die zum kontinuierlichen Liefern eines mit einer Isolationsschicht umhüllten Leiters eingerichtet ist;
eine Abisoliereinheit, die zum Abisolieren von vorbestimmten Bereichen des Leiters, die Enden der Leiterabschnitte bilden, eingerichtet ist; und
eine Verschmutzungsmesseinheit, die zum Ermitteln einer Restverschmutzung an den durch die Abisoliereinheit abisolierten Bereichen mittels UV-Fluoreszenz eingerichtet ist.

Vorzugsweise ist die Bereitstellvorrichtung eingerichtet zum Durchführen des Bereitstellverfahrens nach einer der voranstehenden Ausgestaltungen.

Gemäß einem weiteren Aspekt schafft die Erfindung eine computerimplementierte Steuerung für eine Bereitstellvorrichtung nach einer der voranstehenden Ausgestaltungen, wobei die Steuerung dazu eingerichtet ist, die Bereitstellvorrichtung zum Durchführen des Bereitstellverfahrens nach einer der voranstehenden Ausgestaltungen anzusteuern.

Gemäß einem weiteren Aspekt schafft die Erfindung ein Computerprogramm mit Anweisungen, die eine Bereitstellvorrichtung nach einer der voranstehenden Ausgestaltungen veranlassen, das Bereitstellverfahren nach einer der voranstehenden Ausgestaltungen durchzuführen.

Gemäß einem weiteren Aspekt schafft die Erfindung eine Fertigungsanlage zum Serienfertigen von Hairpin-Statoren, umfassend eine Bereitstellvorrichtung nach einer der voranstehenden Ausgestaltungen.

Bevorzugte Ausgestaltungen der Erfindung betreffen eine flächige Inline-Verschmutzungsmessung beim Abisolieren von Metalllackdrähten mittels UV-Fluoreszenz.

Vorteilhafte Ausgestaltungen ermöglichen einen Qualitätsnachweis einer Abisolierung während der Großserienfertigung. Insbesondere ist eine schnellere Parameterfindung für stabilen Prozess ermöglicht. Durch stabilere Prozesse in der Serienfertigung lassen sich Statoren mit höherer Qualität bei geringerem Ausschuss herstellen. Auch ist eine Inbetriebnahme einer Abisolierstation mit Verfahren gemäß bevorzugten Ausführungsformen der Erfindung schneller als bisher möglich.

Bevorzugte Ausführungsformen der Erfindung schaffen ein inlinefähiges Highspeed-Messsystem zur Integration in Hairpinanlagen. Bevorzugte Anwendungen der so herstellbaren Statoren sind die Elektromobilität und die Großserienproduktion von Fahrmotoren für Elektrofahrzeuge.

Bevorzugte Ausführungsformen der Erfindung finden Verwendung bei der Serienproduktion von Hairpin-Statoren. Die Wicklungen der herzustellenden Hairpin-Statoren bestehen bei einigen Ausführungsformen aus Metalldrähten, welche zur elektrischen Isolation mit einer Lackschicht versehen sind. Diese Hairpin-Wicklungen werden im Folgenden kurz als "Hairpins" bezeichnet. Der Isolierlack - welcher aus organischen Polymeren besteht - soll dabei stellenweise entfernt werden ("abisolieren"), damit die Hairpins nach dem Einziehen in das Blechpaket kontaktiert werden können (bevorzugt mittels Laserstrahlschweißen).

Das Abisolieren geschieht bei bevorzugten Ausgestaltungen der Erfindung in einer Abisoliereinheit einer Hairpinfertigungsmaschine; dies kann beispielsweise durch Fräsen oder Laserabtragen geschehen. Auch für Ausführungsformen der Erfindung geeignete mögliche Konstruktionen von Abisoliereinheiten sowie deren Wirkweise sind beispielsweise aus den vorgenannten Literaturstellen [8], [15] oder [23] bekannt. Bevorzugt enthält die Abisoliereinheit noch eine Bürsteinheit zum Entfernen loser Verschmutzungen / Lackreste sowie eine Absaugung zum Wegführen von Spänen etc. von der Abisolierstelle.

Bei bisher bekannten Abisoliereinheiten und Abisolierverfahren können organische Verschmutzungen (wie z. B. Lackreste oder Öl / Fette) an der Abisolierstelle verbleiben, welche beim nachfolgenden Kontaktierprozess zu Fehlern / Ausschuss führen. Die Menge an verbleibenden Lackresten hängt dabei u. a. von den Parametern des Abisolierprozesses ab, wie z. B. Fräserdrehzahl, Fräserverschleiß, Bürstenverschleiß oder Absaugvolumenstrom.

Bei Ausführungsformen der Erfindung wird die Qualität der Abisolierung durch eine Detektion organischer Partikel an der Abisolierstelle überprüft, um so Leiterabschnitte für die Weiterverarbeitung in der Hairpin-Stator-Fertigung bereitzustellen. Insbesondere wird eine Detektion organischer Verschmutzungen inline durchgeführt, um so z.B. Lackreste zu erkennen.

Zur Detektion organischer Verschmutzungen werden in anderen technischen Gebieten im Wesentlichen zwei Verfahren eingesetzt: Die energiedispersive Röntgenspektroskopie (EDX), siehe [24], und die UV-Fluoreszenz (UVF).

Die EDX-Analyse ist typischerweise Bestandteil der Rasterelektronenmikroskopie. Dabei wird die durch die Abbremsung der Elektronen entstehende Röntgenbremsstrahlung spektroskopisch analysiert, was eine Bestimmung der im bestrahlten Material enthaltenen chemischen Elemente ermöglicht. Die Isolierlacke als organische Verbindungen sind charakterisiert durch das Element Kohlenstoff, welches im metallischen Grundwerkstoff allenfalls in Spuren enthalten ist. Die EDX kann nur in einer evakuierten Kammer durchgeführt werden. Weiterhin können nur kleine Bereiche bei einer vergleichsweise hohen Messdauer untersucht werden. Diese Eigenschaften charakterisieren die EDX als Labormessverfahren, welches nicht für eine vollflächige 100%-Messung der Abisolierstellen innerhalb einer Hairpinfertigungsanlage geeignet ist.

Darüber hinaus werden auch Systeme zur (interferometrischen) Schichtdickenmessungen eingesetzt zur Verschmutzungsdetektion (z. B. auf dem Markt erhältlich von der Fa. Harrandt). Diese Systeme haben ebenso den Nachteil sehr langer Messzeiten und geringer örtlicher Auflösung.

Ausführungsformen der Erfindung nutzen daher eine Detektion von Lackresten und sonstigen organischen Verschmutzungen der abisolierten Bereiche mittels UV-Fluoreszenz (UVF), um die Verschmutzungen während des Prozesses der Großserienfertigung der Hairpin-Statoren zu detektieren.

Die UVF-Analyse basiert ebenfalls auf der Anregung von Elektronen. Hierbei werden die Doppelbindungen organischer Moleküle (wie z. B. Isolierlacke) durch Anregung mittels UV-Strahlung zur Emission von Photonen angeregt - dies wird als Fluoreszenz bezeichnet. Die Wellenlänge der anregenden UV-Strahlung ist dabei auf die zu detektierende Verschmutzung anzupassen. Zur Messung organischer Verschmutzungen sind UVF-basierte Messgeräte kommerziell verfügbar (z. B. Fa. Sita).

Bei einigen Ausführungsformen werden kommerziell erhältliche UVF-basierte Messgeräte zum Bilden einer Verschmutzungsmesseinheit verwendet. Insbesondere wird dabei die UV-Strahlung so angepasst, dass das zum Bilden der Lackschicht verwendete Material zur Fluoreszenz angeregt wird. Wenn die Messsysteme punktförmige Messspots bieten, werden z.B. eine Reihe derartiger Messsysteme eingesetzt, um einen definierten kleinen Bereich der Abisolierstelle abzutasten, beispielsweise zu scannen. Durch die so erhältliche stichpunktartige Vermessung der Verschmutzung wird bereits gegenüber bisherigen Systemen, die gar keine Verschmutzung messen, ein deutlicher Qualitätssprung erreicht.

Mit weiteren optionalen Merkmalen besonders bevorzugter Ausführungsformen der Erfindung lassen sich sogar Lösungen für besonders hochproduktive Anlagen mit Drahtvorschubgeschwindigkeiten > 250 mm/s schaffen, welche eine taktzeitneutrale, hochauflösende Inline-Messung der Restverschmutzung der gesamten Abisolierstelle direkt innerhalb der Hairpinfertigungsmaschine bzw. deren Abisoliereinheit ermöglicht.

Besonders bevorzugte Ausgestaltungen der Erfindung nutzen darüber hinaus (skalare) Kenngrößen, welche eine einfache Bewertung des Verschmutzungsgrades der Abisolierstelle ermöglichen. Dadurch ist es insbesondere möglich, Drähte mit übermäßig verschmutzten Abisolierstellen direkt innerhalb der Hairpinfertigungsmaschine automatisch zu identifizieren / auszuschleusen und/oder den Abisolierprozess datenbasiert zu optimieren zur Reduktion des verbleibenden Restschmutzes.

Einige vorteilhafte Ausgestaltungen der Erfindung zielen auf eine deutliche Reduzierung der Messzeit ab, um taktzeitneutrale Inlinemessungen auch bei sehr kurzen Taktzeiten zu realisieren.

Besonders bevorzugte Ausgestaltungen der Erfindung schaffen eine flächige Messung der gesamten Abisolierstelle bei guter örtlicher Auflösung.

Bei besonders bevorzugten Ausführungsformen werden aktiv n.i.O.-Teile (nicht in Ordnung) aktiv ausgeschleust.

Schweißfehler infolge Lackrückständen sind ein großes Problem bei der Fertigung von Hairpin-Statoren; hierfür entscheidend ist ein perfekt eingestellter Abisol ierprozess.

Mit Methoden gemäß besonders bevorzugter Ausführungsformen der Erfindung ist es möglich, auch bei sehr schneller Großserienfertigung Hairpins mit Lackrückständen inline und taktzeitneutral sicher zu erkennen / ggf. auszuschleusen und somit Schweißfehler zu vermeiden.

Bei besonders bevorzugten Ausgestaltungen der Erfindung werden hierzu die UVF-Messverfahren für eine schnelle Großserienproduktion besonders angepasst.

Die derzeit auf dem Markt erhältlichen UVF-basierten Messgeräte können in zwei Untergruppen unterschieden werden: Geräte mit punktförmigem Messspot ermöglichen keine flächige Messung bzw. nur durch sehr zeitaufwändiges Abrastern der Fläche mit einer Scanneroptik; die punktförmige Messung hat dabei eine geringe örtliche Auflösung zur Folge. Kamerabasierte Geräte ermöglichen zwar eine direkte flächige Messung mit guter örtlicher Auflösung, erfordern zur Erreichung hoher Genauigkeiten jedoch lange Belichtungszeiten.

Besonders bevorzugte Ausgestaltungen der Erfindung schaffen, beispielsweise durch Anpassung der Belichtung, ein flächiges Messsystem mit einer ausreichend kurzen Messzeit, so dass eine taktzeitneutrale Messung mit hoher Auflösung möglich ist.

Besonders bevorzugte Ausgestaltungen der Erfindung sehen eine Integration dieses Messsystems in eine Hairpinanlage vor.

Hierzu werden bei einigen Ausführungsformen der Erfindung geeignete Kennwerte zur Quantifizierung der Verschmutzungen definiert.

Ausführungsbeispiele der Erfindung werden im Folgenden anhand der beigefügten Zeichnungen näher erläutert. Darin zeigt:
- Fig. 1: ein schematisches Blockdiagramm einer Herstellanlage zur Serienfertigung von Hairpin-Statoren mit einer Bereitstellvorrichtung zum Bereitstellen von Leiterabschnitten im Zuge der Serienfertigung der Hairpin-Statoren;
- Fig. 2: eine Draufsicht auf eine Ausführungsform einer in der Bereitstellvorrichtung vorgesehenen Verschmutzungsmesseinheit;
- Fig. 3: eine vergrößerte Ansicht eines Leiters mit einem abisolierten Bereich, der durch Lackreste verschmutzt ist; und
- Fig. 4: ein Flussdiagramm für eine bevorzugte Ausführungsform eines bei einem Bereitstellverfahren zur Bereitstellung von Hairpins für Hairpin-Statoren in der Serienfertigung durchzuführenden Verschmutzungsmessverfahrens zur Bewertung der Qualität von abisolierten Bereichen.

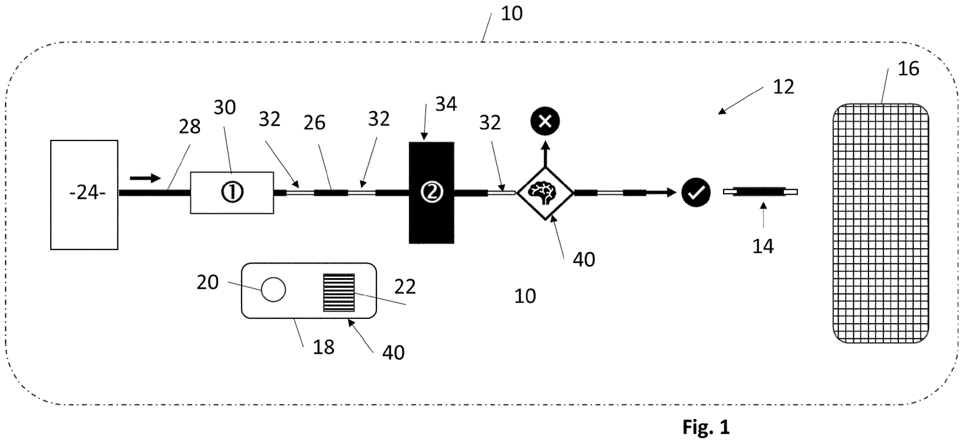

Fig. 1 zeigt eine schematische Übersichtsdarstellung einer Fertigungsanlage 10 zum Serienfertigen von Hairpin-Statoren, die eine Bereitstellvorrichtung 12 zum Bereitstellen von Leiterabschnitten 14, aus denen durch das Hairpin-Verfahren die Spulenwicklung des Hairpin-Stators hergestellt wird, sowie die in Fig. 1 als Block 16 dargestellten weiteren Vorrichtungen und Stationen einer solchen Fertigungsanlage 10, wie sie grundsätzlich, z.B. aus den Literaturstellen [1], [6], [9], [20] oder [22] bekannt sind, sowie eine computerimplementierte Steuerung 18 mit Prozessor 20 und Speicher 22 aufweist, in dem u.a. ein Computerprogramm zum Steuern der Bereitstellvorrichtung 12 gespeichert ist.

Die Bereitstellvorrichtung 12 weist eine Leiterliefereinheit 24, die zum kontinuierlichen Liefern eines mit einer Isolationsschicht 26 umhüllten Leiters 28 eingerichtet ist, eine Abisoliereinheit 30, die zum Abisolieren von vorbestimmten Bereichen 32 des Leiters 28, die Enden der Leiterabschnitte 14 bilden, eingerichtet ist und eine Verschmutzungsmesseinheit 34 auf, die zum Ermitteln einer Restverschmutzung an den durch die Abisoliereinheit 30 abisolierten Bereichen 32 mittels UV-Fluoreszenz eingerichtet ist.

Die Liefereinheit 24 kann von grundsätzlich bekannter Art sein, wie sie beispielsweise aus [2] bekannt ist. Insbesondere wird ein mit einem polymeren elektrisch isolierenden Material (Isolationsmaterial - vorbestimmter Kunststoff) umhüllter Kupferdraht als Endlosdraht mit vorzugsweise rechteckigem Querschnitt von einer in Fig. 1 nicht dargestellten Vorratsrolle mit vorbestimmten Geschwindigkeiten abgerollt und der Abisoliereinheit 30 zugeführt.

Die Abisoliereinheit 30 ist ebenfalls von grundsätzlich bekannter Art, wie sie beispielsweise aus den Literaturstellen [8], [15], [23] bekannt ist. Sie weist in in Fig. 1 nicht dargestellter Weise Abisolierwerkzeuge wie beispielsweise Schabmesser, Fräser oder Laser auf, um die Bereiche 32 von der Isolationsschicht 26 zu befreien. Weiter sind Mittel zum Entfernen der dabei entstehenden Isolationsmaterialpartikel, wie z.B. Absaugungen und/oder Bürsten vorgesehen.

Die Abisoliereinheit 30 wird so gesteuert, dass die Bereiche 32 abhängig von der Länge der bereitzustellenden Leiterabschnitte 14 voneinander entfernt sind. Die Bereitstellvorrichtung 12 weist weiter eine in Fig. 1 nicht dargestellte, aber grundsätzlich ebenfalls bekannte Vereinzelungseinrichtung zum Vereinzeln der Leiterabschnitte 14 auf. Diese weist insbesondere ein geeignetes Schneidwerkzeug auf, mit dem der Leiter 28 vorzugsweise in der Mitte der abisolierten Bereiche 32 durchtrennt wird, um so die noch geradlinigen Leiterabschnitte 14 zu erhalten, die dann in den weiteren Vorrichtungen 16 und Stationen zu Hairpins oder auch eventuell I-Pins (zum Bilden von Endanschlüssen der Spulenwicklung) geformt und in ein Blechpaket eingesetzt und verbunden werden, wie dies aus den eingangs erwähnten Literaturstellen bekannt ist.

Um Verschmutzungen der Abisolierstelle (z. B. Lackreste) zu detektieren, ist bei der dargestellten Ausführungsform in der Hairpinfertigungsmaschine - Fertigungsanlage 10 für Hairpin-Statoren - die Verschmutzungsmesseinheit 34 integriert, welche der Abisoliereinheit 30 nachgelagert ist. Bei besonders bevorzugten Ausführungsformen weist die Verschmutzungsmesseinheit 34 eine UV-Quelle 36 und eine Kamera 38 sowie ein Rechnersystem 40 zur Analyse / Klassifizierung der erfassten Bilddaten auf.

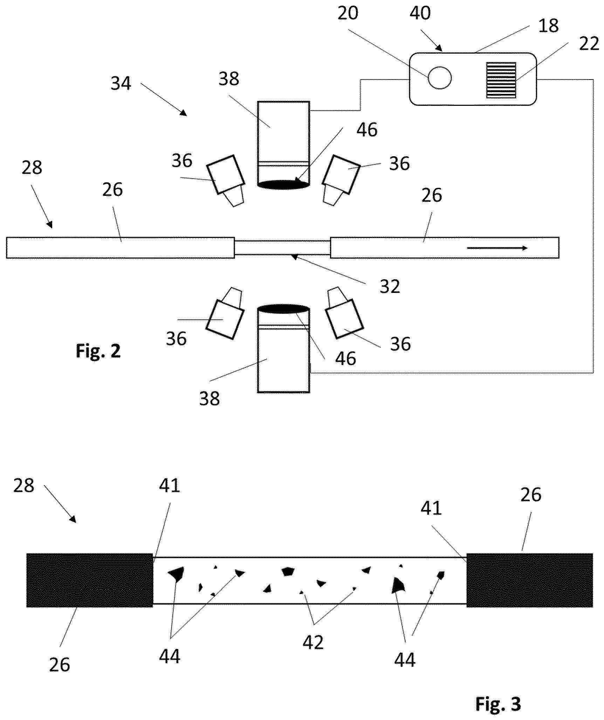

Ein Ausführungsbeispiel für die Verschmutzungsmesseinheit 34 ist in Fig. 2 dargestellt. Gemäß dieser Ausführung weist die Verschmutzungsmesseinheit 34 mehrere UV-Quellen 36 auf, um den jeweiligen abisolierten Bereich 32 von mehreren Seiten mit UV-Licht zu beleuchten. Weiter sind mehrere Kameras 38 vorgesehen, um jeweils ein flächiges Bild von mehreren Seiten jedes abisolierten Bereichs aufzunehmen. Das Rechnersystem 40 ist in dem gezeigten Beispiel als Teil der Steuerung 18 ausgebildet, die auch zum Steuern der Bereitstellvorrichtung 12 eingerichtet ist. Beispielsweise ist in dem Speicher 22 ein Computerprogramm zur Analyse und Klassifizierung der so erhaltenen Bilddaten gespeichert. Das entsprechende Verfahren wird hiernach noch näher erläutert.

Fig. 3 zeigt eine vergrößerte Ansicht des Leiters 28 mit einem der abisolierten Bereiche 32. Der abisolierte Bereich 32 wird durch Kanten 41 der Isolationsschicht 26 begrenzt. In dem in Fig. 3 dargestellten Beispiel sind mehrere Verschmutzungsstellen dargestellt, die z.B. durch noch anhaftende kleine Partikel 42 des Isoliermaterials oder durch größere Cluster 44 Isoliermaterial gebildet sind.

Bei der Großserienfertigung von Hairpin-Statoren werden demnach zunächst Leiterabschnitte 18 mit einem Bereitstellverfahren bereitgestellt, welches folgende Schritte umfasst:
a) Bereitstellen eines mit einer Isolationsschicht 26 umhüllten Leiters 28,
b) Abisolieren von vorbestimmten Bereichen 32 des Leiters 28, die Enden der Leiterabschnitte 14 bilden,
c) Ermitteln einer Restverschmutzung an den in Schritt b) abisolierten Bereichen mittels UV-Fluoreszenz.

Bei einigen Ausführungsformen umfasst das Bereitstellverfahren weiter den Schritt:
d) Klassifizieren der in Schritt c) untersuchten abisolierten Bereiche als in Ordnung oder nicht in Ordnung.

Bei einigen Ausführungsformen umfasst das Bereitstellverfahren weiter den Schritt:
e) Anpassen von Schritt b) in Abhängigkeit von Schritt c) oder d).

Bei einigen Ausführungsformen umfasst das Bereitstellverfahren weiter den Schritt:
f1) Durchtrennen des Leiters in den abisolierten Bereichen, um einen Leiterabschnitt zu vereinzeln.

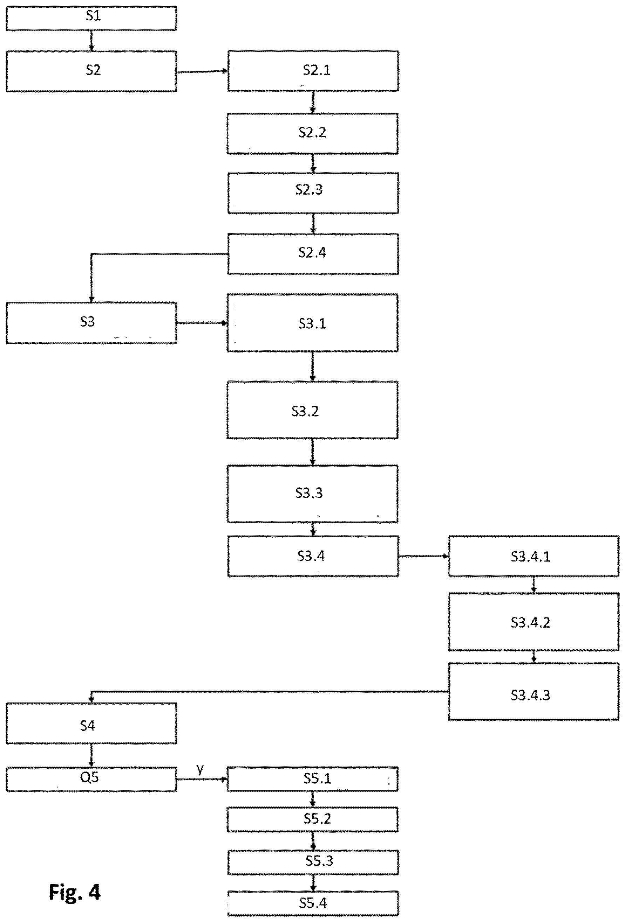

Fig. 4 zeigt ein Flussdiagramm zum Durchführen der Messung der Verschmutzung, der Klassifizierung und der Anpassung. Das Flussdiagramm ist mit folgender Beschriftung selbsterklärend:

| | |
|---|---|
| S1 | Absiolieren von Hairpins |
| S2 | Flächige Restschmutzerfassung |
| | S2.1 Anregung mit UV-Beleuchtung |
| | S2.2 Isolierung fluoresziert / Kupfer fluoresziert nicht |
| | S2.3 Filterung der Anregungswellenlänge |
| | S2.4 Erfassung der Fluoreszenzantwort |
| S3 | Flächenbasierte Bewertung der Verschmutzung (Bild) |
| | S3.1 Detektion der Isolierung rechts/links von der Abisolierstelle |
| | S3.2 Kantendetektion Kantenübergang Isolierung/Abisolierstelle |
| | S3.3 Detektion von Verschmutzungen auf der Abisolierstelle |
| | S3.4 Bewertung der Verschmutzung |
| | S3.4.1 Schritt 1 Summenbildung (Heller Pixel) |
| | S3.4.2 Schritt 2 Mittlere Verschmutzung (Verhältnis helle zu dunkle Pixel) |
| | S3.4.3 Clusteranalyse (Größe und Position von Anhäufungen) |
| S4 | Ausschleusen, falls Schwellwert verletzt wurde |
| Q5 | Häufung NIO? |
| y | Ja |
| | S5.1 Kontrolle Abisolierwerkzeug |
| | S5.2 Kontrolle Absaugung |
| | S5.3 Kontrolle Bürsten |
| | S5.4 (Anpassung) Abisolierparameter |

Im Folgenden werden bevorzugte Ausgestaltungen des Bereitstellverfahrens und insbesondere des Verfahrens zur Vermessung und Bewertung von Verschmutzungen näher erläutert.

Es wird ein Verfahren zur flächigen Restschmutzerfassung auf der gesamten Abisolierstelle - gesamter abisolierter Bereich 32 wie in Fig. 3 dargestellt - durchgeführt.

Die organischen Verschmutzungen - nicht jedoch das Grundmetall des Drahts - werden durch die UV-Strahlung zur Fluoreszenz angeregt. Die Wellenlänge der anregenden UV-Strahlung ist dabei auf die zu detektierende Verschmutzung anzupassen; bevorzugt kommen Wellenlängen im Bereich 100 ... 470 nm, bevorzugt 280 - 450 nm, besonders bevorzugt 350 - 400 nm zum Einsatz.

Die emittierte Fluoreszenzstrahlung hat dabei typischerweise eine von der anregenden UV-Strahlung abweichende Wellenlänge. Simultan zur hochintensiven UV-Anregung wird die gesamte Abisolierstelle 32 mit den fluoreszierenden Schmutzpartikeln mit einer 2D-Kamera 38 fotografiert; bevorzugt kommt dabei eine Kamera mit CMOS-Sensor und Global Shutter mit einer Pixelgröße > 5 µm zum Einsatz. Dadurch können sehr kurze Belichtungszeiten realisiert werden, so dass es möglich ist, die Abisolierstellen 32 im Takt einer hochproduktiven Hairpinfertigungsmaschine - Fertigungsanlage 10 - vollumfänglich zu vermessen. Weiterhin befindet sich ein optischer Filter 46 vor der Kamera 38, welcher die anregende UV-Wellenlänge unterdrückt, so dass die Fluoreszenzantwort der Verschmutzung klar abgebildet werden kann.

Anschließend erfolgt eine flächige Bewertung des Verschmutzungsgrades durch Bildverarbeitungsalgorithmen.

Die erfassten Bilddaten werden nach der zuvor beschriebenen flächigen Restschmutzerfassung durch spezielle Bilddatenverarbeitungsalgorithmen analysiert.

Bei einigen Ausführungsformen wie z.B. der von Fig. 4 wird in einem ersten Schritt die Abisolierstelle 32 durch eine Auswertung der Bildkontraste lokalisiert. Dabei wird ausgenutzt, dass das freigelegte Grundmetall - z.B. Kupfer - in der Abisolierstelle 32 nicht fluoresziert, wohingegen die vor und nach der Abisolierstelle 32 liegenden Bereiche mit unverletztem Lack sehr stark fluoreszieren.

Anschließend werden bei der dargestellten Ausführungsform die innerhalb der Abisolierstelle 32 liegenden Verschmutzungen durch die Anwendung eines applikationsspezifischen Schwellwert-Kriteriums (Grauwert) identifiziert. Das bedeutet konkret, dass alle Pixel, welche heller sind als der Schwellwert, als Verschmutzung klassifiziert werden. Bevorzugt wird ein Grauwert, der mittig zwischen Lack (fluoresziert stark) und Grundmetall (fluoresziert nicht) liegt, als Schwellwert eingestellt.

Bei einigen Ausführungsformen wird eine Quantifizierung der Verschmutzungen (innerhalb der Abisolierstelle) durchgeführt. Dies wird im Folgenden anhand des Ausführungsbeispiels von Fig. 4 beschrieben.

Bei dem dargestellten Ausführungsbeispiel werden in einem nächsten Schritt die identifizierten Verschmutzungen durch Berechnung mehrerer Kennwerte quantifiziert; dabei sind globale und lokale Kennwerte zu unterscheiden. Die globalen Kennwerte beschreiben die gesamte Abisolierstelle 32 in Form einfacher skalarer Kennzahlen, wohingegen die lokalen Kennwerte die einzelnen Verschmutzungscluster 44 detaillierter beschreiben.

Globale Kennwerte sind z. B. der mittlere Grauwert aller Pixel innerhalb der Abisolierstelle 32 oder der relative Flächenanteil der als Verschmutzung klassifizierten Pixel innerhalb der Abisolierstelle 32. Die lokalen Kennwerte beschreiben im Wesentlichen die Größe, Form und Position der einzelnen Verschmutzungscluster 44 - so z. B. die Größe der größten zusammenhängenden Verschmutzung innerhalb der Abisolierstelle 32. Aus den lokalen Analysedaten können weiterhin auch statistische Auswertungen, wie z. B. die Häufigkeitsverteilung der Clustergrößen, berechnet werden.

Bei einigen Ausführungsformen wird eine Klassifikation der abisolierten Bereiche 32 durchgeführt. Auch dies wird im Folgenden anhand des Ausführungsbeispiels von Fig. 4 beschrieben.

Bei dem dargestellten Ausführungsbeispiel wird abschließend jede Abisolierstelle bzw. das entsprechende Drahtstück durch Abgleich der berechneten Verschmutzungskennwerte mit applikationsspezifischen Grenzwerten klassifiziert in i. O. (Gutteil) bzw. n. i. O. (Ausschuss); das Resultat der Klassifikation wird vom Bilddatenrechner 40 an die Steuerung 18 der Hairpinfertigungsmaschine übertragen: i. O.-Teile passieren die Verschmutzungsmesseinheit 34 und werden weiterverarbeitet; n. i. O.-Teile werden hingegen automatisch ausgeschleust, siehe Fig. 1. Somit wird sichergestellt, dass beim nachfolgenden Kontaktieren der Hairpins keine verschmutzungsbedingten Prozessfehler auftreten.

Bei einigen Ausführungsformen erfolgt eine Anpassung der Parameter des Abisolierprozesses, wie im Folgenden erneut unter Bezug auf Fig. 4 beschrieben. Die Häufigkeit des Auftretens von n. i. O.-Teilen mit verschmutzten Abisolierstellen wird von der Maschinensteuerung 18 ausgewertet. Falls die n. i. O.-Rate den voreingestellten Grenzwert überschreitet, gibt die Steuerung 18 eine Alarmmeldung aus. Der Anlagenführer überprüft dann die Abisoliereinheit 30 und nimmt ggf. entsprechende Anpassungen vor. Bevorzugt sind folgende Prüfungen / Maßnahmen durchzuführen:
- Kontrolle des Verschleißzustands aller relevanten Komponenten
- Kontrolle der Reinigungsvorrichtung
- Kontrolle der Prozessparameter

Ein Vorteil der oben beschriebenen Verfahrensweise liegt darin, dass der gesamte Qualitätsregelkreis - bestehend aus flächiger, taktzeitneutraler, hochauflösender Inline-Verschmutzungsmessung, Bilddatenanalyse zur Quantifizierung der Verschmutzungen und Entscheidungslogik - in Echtzeit parallel zu den eigentlichen Fertigungsoperationen abläuft ("Das Ganze ist mehr als die Summe der Einzelteile."). Dadurch wird erreicht, dass übermäßig verschmutzte Hairpins direkt innerhalb der Hairpinfertigungsmaschine identifiziert und ausgeschleust werden können, was wiederum Schweißfehler vermeidet. Weiterhin wird so eine kurze Regelschleife zu Kontrolle / Optimierung des Abisolierprozesses realisiert.

Wenngleich eine bevorzugte Ausführungsform im Detail beschrieben worden ist, sollte klar sein, dass vielfältige Abänderungen möglich sind. So sind bei einigen, insbesondere kostengünstigeren oder langsameren Fertigungsanlagen nicht alle obigen Schritte vorgesehen. Beispielsweise wird bei einigen Ausführungsformen nur ein Mittelstück des abisolierten Bereichs 32 untersucht, so dass eine Lokalisierung/Positionierung auch über Daten der Steuerung 18 erfolgen kann und so dass einfachere Aufnahme- und Auswerteverfahren verwendet werden können, z.B. ein Abgleich des Grauwerts mit einem vorbestimmten Wert.

Zur Verbesserung der Qualität von Hairpin-Statoren und zur Verringerung des Ausschusses bei deren Fertigung schafft die Erfindung ein im Zuge der Serienfertigung von Hairpin-Statoren durchzuführendes Bereitstellverfahren zum Bereitstellen von Leiterabschnitten (14) zur Herstellung einer Spulenwicklung, umfassend:
a) Bereitstellen eines mit einer Isolationsschicht (26) umhüllten Leiters (28),
b) Abisolieren von vorbestimmten Bereichen (32) des Leiters (28), die Enden der Leiterabschnitte (14) bilden,
c) Ermitteln einer Restverschmutzung an den in Schritt b) abisolierten Bereichen (32) mittels UV-Fluoreszenz.

Zum Durchführen des Verfahrens wird eine Bereitstellvorrichtung (12) zum Bereitstellen von Leiterabschnitten (14) zur Herstellung einer Spulenwicklung im Zuge der Serienfertigung von Hairpin-Statoren vorgeschlagen, umfassend:
eine Leiterliefereinheit (24), die zum kontinuierlichen Liefern eines mit einer Isolationsschicht (26) umhüllten Leiters (28) eingerichtet ist;
eine Abisoliereinheit (30), die zum Abisolieren von vorbestimmten Bereichen (32) des Leiters (28), die Enden der Leiterabschnitte (14) bilden, eingerichtet ist; und eine Verschmutzungsmesseinheit (34), die zum Ermitteln einer Restverschmutzung an den durch die Abisoliereinheit (30) abisolierten Bereichen (32) mittels UV-Fluoreszenz eingerichtet ist.

### Bezugszeichenliste:

- 10: Fertigungsanlage
- 12: Bereitstellvorrichtung
- 14: Leiterabschnitt
- 16: Vorrichtungen zum Umformen, Einsetzen und Verbinden der Leiterabschnitte zum Bilden der Spulenwicklung des Hairpin-Stators
- 18: Steuerung
- 20: Prozessor
- 22: Speicher
- 24: Liefereinheit
- 26: Isolationsschicht
- 28: Leiter
- 30: Abisoliereinheit
- 32: abisolierter Bereich (auch Abisolierstelle genannt)
- 34: Verschmutzungsmesseinheit
- 36: UV-Quelle
- 38: Kamera
- 40: Rechnersystem
- 41: Kante
- 42: Partikel
- 44: Cluster
- 46: optischer Filter
- S1: Absiolieren von Hairpins
- S2: Flächige Restschmutzerfassung
S2.1 Anregung mit UV-Beleuchtung
S2.2 Isolierung fluoresziert / Kupfer fluoresziert nicht
S2.3 Filterung der Anregungswellenlänge
S2.4 Erfassung der Fluoreszenzantwort
- S3: Flächenbasierte Bewertung der Verschmutzung (Bild)
S3.1 Detektion der Isolierung rechts/links von der Abisolierstelle
S3.2 Kantendetektion Kantenübergang Isolierung/Abisolierstelle
S3.3 Detektion von Verschmutzungen auf der Abisolierstelle
S3.4 Bewertung der Verschmutzung
   S3.4.1 Schritt 1 Summenbildung (Heller Pixel)
   S3.4.2 Schritt 2 Mittlere Verschmutzung (Verhältnis helle zu dunkle Pixel)
   S3.4.3 Clusteranalyse (Größe und Position von Anhäufungen)
- S4: Ausschleusen, falls Schwellwert verletzt wurde
- Q5: Häufung NIO?
- y: Ja
S5.1 Kontrolle Abisolierwerkzeug
S5.2 Kontrolle Absaugung
S5.3 Kontrolle Bürsten
S5.4 (Anpassung) Abisolierparameter

## Patentansprüche

1. Im Zuge der Serienfertigung von Hairpin-Statoren durchzuführendes Bereitstellverfahren zum Bereitstellen von Leiterabschnitten (14) zur Herstellung einer Spulenwicklung, umfassend:
a) Bereitstellen eines mit einer Isolationsschicht (26) umhüllten Leiters (28),
b) Abisolieren von vorbestimmten Bereichen (32) des Leiters (28), die Enden der Leiterabschnitte (14) bilden,
c) Ermitteln einer Restverschmutzung an den in Schritt b) abisolierten Bereichen (32) mittels UV-Fluoreszenz.

2. Bereitstellverfahren nach Anspruch 1, **dadurch gekennzeichnet,**
**dass** Schritt c) die Schritte umfasst:
c1) Bestrahlen jedes abisolierten Bereichs (32) mit UV-Licht;
c2) Erfassen von durch Fluoreszenz an dem Bereich (32) erzeugter Strahlung; und
c3) Ermitteln der Restverschmutzung anhand der in Schritt c2) erfassten Strahlung.

3. Bereitstellverfahren nach Anspruch 2, **dadurch gekennzeichnet,**
**dass** Schritt c1) wenigstens einen oder mehrere der Schritte umfasst:
c1.1) Anpassen der Wellenlänge des UV-Lichts an das Material der zu detektierenden Verschmutzung;
c.1.2) Anpassen oder Auswahl der Wellenlänge des UV-Lichts derart, dass das Material der Isolationsschicht (26) zur Fluoreszenz angeregt wird;
c1.3) Bestrahlen des abisolierten Bereichs mit UV-Licht mit einer Wellenlänge im Bereich von einschließlich 100 nm bis einschließlich 470 nm, vorzugsweise 280 nm bis 450 nm und mehr insbesondere 350 nm bis 400 nm;
c1.4) Bestrahlen des gesamten abisolierten Bereichs (32).

4. Bereitstellverfahren nach einem der Ansprüche 2 oder 3, **dadurch gekennzeichnet,**
**dass** Schritt c2) wenigstens einen oder mehrere der Schritte umfasst:
c2.1) flächiges Erfassen der Fluoreszenzantwort;
c2.2) Aufnahme wenigstens eines zweidimensionalen Bildes des abisolierten Bereichs (32);
c2.3) Fotografieren des abisolierten Bereichs (32) mittels einer 2D-Kamera;
c2.4) Erfassen der Strahlung durch ein optisches Filter (46) hindurch, welches das anregende UV-Licht herausfiltert;
c2.5) Fotografieren des gesamten abisolierten Bereichs (32);
c2.6) Fotografieren mittels einer Kamera (38) mit CMOS-Sensor und Global Shutter mit einer Pixelgröße größer als 5 µm;
c2.7) Fotografieren des abisolierten Bereichs (32) von mehreren Seiten aus.

5. Bereitstellverfahren nach einem der Ansprüche 2 bis 4, **dadurch gekennzeichnet,**
**dass** Schritt c3) wenigstens einen oder mehrere der Schritte umfasst:
c3.1) flächiges Bewerten der Verschmutzung mittels Bildverarbeitung eines in Schritt c2) aufgenommenen Bildes;
c3.2) Analysieren von in Schritt c2) ermittelten Bilddaten mittels wenigstens eines Bildverarbeitungsalgorithmus;
c3.3) Lokalisieren der Abisolierstelle; insbesondere mittels Erfassung der Ränder des abisolierten Bereichs (32), insbesondere mittels Kantenerfassung;
c3.4) Detektion von Verschmutzungen in dem abisolierten Bereich (32);
c3.5) Identifizierung von innerhalb des abisolierten Bereichs (32) liegenden Verschmutzungen durch Anwendung eines Schwellwert-Kriteriums, insbesondere bezüglich eines Grauwerts;
c3.6) Klassifizierung aller Pixel, die heller als ein vorbestimmter Schwellwert sind, als Verschmutzung;
c3.7) Auswahl eines Grauwerts, der mittig zwischen einem Grauwert einer UV-Fluoreszenzantwort eines vollständig mit Isolationsschicht (26) versehenen Bereichs des Leiters (28) und dem Grauwert einer UV-Fluoreszenzantwort des reinen leitfähigen Grundmaterials des Leiters (28) liegt, als Schwellwert für die Verschmutzung.

6. Bereitstellverfahren nach einem der Ansprüche 2 bis 5, **dadurch gekennzeichnet,**
**dass** Schritt c3) wenigstens einen oder mehrere der Schritte umfasst:
c3.8) Quantifizierung der Verschmutzungen in dem abisolierten Bereich (32);
c3.9) Quantifizierung der Verschmutzungen durch Berechnung mehrerer Kennwerte;
c3.10) Quantifizierung der Verschmutzungen durch globale und/oder lokale Kennwerte, wobei globale Kennwerte aus Werten aus dem gesamten abisolierten Bereich ermittelt werden und lokale Kennwerte jeweils aus Werten aus einem örtlichen Teilbereich des abisolierten Bereichs (32) oder aus einem Verschmutzungscluster (44) in dem abisolierten Bereich (32) ermittelt werden;
c3.11) Berechnen des mittleren Grauwerts über den gesamten abisolierten Bereich (32) gesehen;
c3.12) Berechnen des relativen Flächeninhalts der als Verschmutzung klassifizierten Teilbereiche oder Pixel innerhalb des abisolierten Bereichs (32);
c3.13) Ermitteln der Größe, Form und/oder Position einzelner Verschmutzungscluster (44), insbesondere der größten zusammenhängenden Verschmutzung innerhalb des abisolierten Bereichs (32);
c3.14) Erstellen statistischer Analysedaten, insbesondere Verteilungen von Größen bzw. Positionen von Verschmutzungsclustern (32).

7. Bereitstellverfahren nach einem der voranstehenden Ansprüche, **gekennzeichnet durch** einen oder mehrere Schritte:
d) Klassifizieren der in Schritt c) untersuchten abisolierten Bereiche (32) als in Ordnung oder nicht in Ordnung;
e) Anpassen von Schritt b) in Abhängigkeit von Schritt c) oder d).

8. Bereitstellverfahren nach Anspruch 7, **dadurch gekennzeichnet,**
**dass** Schritt d) wenigstens einen oder mehrere der Schritte umfasst:
d1) Vergleich eines in Schritt c) ermittelten Kennwerts für die aktuelle Verschmutzung mit einem vorbestimmten Grenzwert;
d2) Vergleich mehrerer in Schritt c) ermittelter Kennwerte für die aktuelle Verschmutzung mit jeweiligen vorbestimmten Grenzwerten;
d3) Ermitteln des Resultats der Klassifizierung von einer Auswerteeinheit einer Verschmutzungsmesseinheit zu einer Steuerung einer Herstellanlage zum Herstellen von Hairpin-Statoren;
d4) automatisches Ausschleusen von Leiterabschnitten (14), die einen als nicht in Ordnung klassifizierten abisolierten Bereich (32) aufweisen;
d5) Weiterverarbeiten von als in Ordnung befundenen abisolierten Bereichen (32).

9. Bereitstellverfahren nach einem der Ansprüche 7 oder 8, **dadurch gekennzeichnet,**
**dass** Schritt e) wenigstens einen oder mehrere der Schritte umfasst:
e1) Bestimmen einer zu großen Restverschmutzung durch Ermitteln, ob die Häufigkeit von als nicht in Ordnung klassifizierten abisolierten Bereichen (32) einen vorbestimmten Grenzwert übersteigt;
e2) Ausgabe eines Alarms im Fall einer zu großen Restverschmutzung;
e3) Überprüfen einer Abisoliereinheit (30), in der Schritt b) durchgeführt wird, im Fall einer zu großen Restverschmutzung;
e4) Kontrolle des Verschleißzustandes wenigstens einer, mehrerer oder aller Komponenten einer Abisoliereinheit (30) im Fall einer zu großen Restverschmutzung;
e5) Kontrolle einer Reinigungseinrichtung und/oder einer Absaugung im Fall einer zu großen Restverschmutzung;
e6) Kontrolle und gegebenenfalls Einstellen von Prozessparametern für Schritt b) im Fall einer zu großen Restverschmutzung.

10. Hairpinstator-Herstellverfahren zum Serienfertigen von Hairpin-Statoren, umfassend Durchführen des Bereitstellverfahrens nach einem der voranstehenden Ansprüche zum Bereitstellen von Hairpin-Leiterabschnitten (14), und Einfügen der Hairpin-Leiterabschnitte (14) in ein Blechpaket, um eine Spulenwicklung durch Verbindung der Leiterenden der eingefügten Leiterabschnitte (14) herzustellen.

11. Bereitstellvorrichtung (12) zum Bereitstellen von Leiterabschnitten (14) zur Herstellung einer Spulenwicklung im Zuge der Serienfertigung von Hairpin-Statoren, umfassend:
eine Leiterliefereinheit (24), die zum kontinuierlichen Liefern eines mit einer Isolationsschicht (26) umhüllten Leiters (28) eingerichtet ist;
eine Abisoliereinheit (30), die zum Abisolieren von vorbestimmten Bereichen (32) des Leiters (28), die Enden der Leiterabschnitte (14) bilden, eingerichtet ist; und
eine Verschmutzungsmesseinheit (34), die zum Ermitteln einer Restverschmutzung an den durch die Abisoliereinheit (30) abisolierten Bereichen (32) mittels UV-Fluoreszenz eingerichtet ist.

12. Bereitstellvorrichtung (12) nach Anspruch 11, eingerichtet zum Durchführen des Bereitstellverfahrens nach einem der Ansprüche 1 bis 9.

13. Computerimplementierte Steuerung (18) für eine Bereitstellvorrichtung (12) nach einem der Ansprüche 11 oder 12, eingerichtet dazu, die Bereitstellvorrichtung (12) zum Durchführen des Bereitstellverfahrens nach einem der Ansprüche 1 bis 9 anzusteuern.

14. Computerprogramm mit Anweisungen, die eine Bereitstellvorrichtung (12) nach einem der Ansprüche 11 oder 12 veranlassen, das Bereitstellverfahren nach einem der Ansprüche 1 bis 9 durchzuführen.

15. Fertigungsanlage (10) zum Serienfertigen von Hairpin-Statoren, umfassend eine Bereitstellvorrichtung (12) nach einem der Ansprüche 11 oder 12.
